# EUROPÄISCHE PATENTSCHRIFT

(11) **EP 1 705 232 B1**
(45) Veröffentlichungstag und Bekanntmachung des Hinweises auf die Patenterteilung: **20.06.2007**
(21) Anmeldenummer: 05006288.4
(22) Anmeldetag: 22.03.2005
(51) Int. Cl.: C09K 3/10, E04B 1/68, C08J 9/42

(54) **Dichtungselement**
Sealing element
élément d'étanchéité

(43) Veröffentlichungstag der Anmeldung: 27.09.2006
(73) Patentinhaber: ISO-Chemie GmbH, 73431 Aalen (DE)
(72) Erfinder:
(74) Vertreter: Wächter, Jochen

(56) Entgegenhaltungen:
- EP-A- 0 317 833
- EP-A- 1 473 419
- EP-B- 0 688 382
- DE-B- 1 000 946
- DE-U1-8202004 014 18
- US-A- 5 272 001

## Beschreibung

Die Erfindung betrifft ein Dichtungselement aus dauerelastischem Schaumstoff sowie ein Verfahren zu dessen Herstellung.

Dichtungselemente sind bereits in verschiedenen Ausgestaltungen bekannt geworden und werden zur Abdichtung gegen Regen, Feuchtigkeit, Luft und Schall oder zur Vibrationsdämpfung in verschiedensten technischen Industriebereichen eingesetzt, wobei die Dichtungselemente üblicherweise in Form von Bändern oder Formteilen hergestellt werden. Neben sogenannten offenzelligen Schaumstoffen, die eine relativ hohe Luftdurchlässigkeit aufweisen, sind auch sogenannte geschlossenzellige Schaumstoffe bekannt, die eine geringe Luftdurchlässigkeit aufweisen. Üblicherweise lassen sich offenzellige Schaumstoffe mit unterschiedlichen Stoffen tränken bzw. imprägnieren, um z.B. eine erhöhte Stabilität, Feuerfestigkeit oder UV-Beständigkeit zu erreichen.

Grundlegende Beispiele derartiger Dichtungselemente sind etwa aus der FR 1 544 724, der DE 1 000 946, der EP 317 833 A2 und der EP 688 382 B1 bekannt.

Nachteilig an den bisher bekannten Dichtungselementen war, dass bestimmte Anforderungen wie verringerte Luftdurchlässigkeit oder erhöhte Schlagregendichtigkeit entweder lediglich bei starker Komprimierung offenzelliger Dichtungselemente oder bei Einsatz geschlossenzelliger Dichtungselemente erfüllbar waren, die wiederum nur schwer mit zusätzlichen Eigenschaften wie einer verzögerten Rückstellung nach Kompression, Feuerbeständigkeit usw. versehen werden können.

Kleine Kunststoffkugeln, die aus einer Polymerschale mit darin enthaltenem Gas bestehen und die bei Erhitzung expandieren, auch Mikrosphären genannt, sind ebenfalls bekannt und werden z.B. von der Firma Expancel hergestellt. Sie werden beispielsweise als Treibmittel zur Volumensteigerung im Sieb- und Tiefdruck verwendet, um dreidimensionale Effekte auf Papier zu erzielen. Weiterhin werden sie in Thermoplasten verwendet, wobei sie während der Extrusion oder beim Spritzgussverfahren eine geschlossene Zellstruktur bilden. Auch eine Verwendung als Leichtfüller und zur Verbesserung der Oberflächeneigenschaften von Kunststoffmaterialien ist bekannt.

Aus der US 5,272,001 ist ein mit Mikrosphären gefüllter Polyurethanschaumstoff bekannt, der in erster Linie als Teppichunterlage verwendet werden soll, bei der die Stoß absorbierenden Eigenschaften der Mikrosphären besonders wichtig sind. Als ein mögliches Verfahren zum Herstellen eines derartigen Schaumstoffs wird vorgeschlagen, zunächst einen offenzelligen Polyurethanschaum geringer Dichte herzustellen und anschließend die nichtexpandierten Mikrosphären in die offenen Zellen des Schaumstoffs beispielsweise durch Blasen oder Sprühen einzubringen und schließlich den mit Mikrosphären gefüllten Schaumstoff zu erhitzen. Der Prozentsatz von Mikrosphären im Schaumstoff soll zwischen 20 und 80 Gew.-% betragen.

Aus der DE 20 2004 014 188 U1 ist ein weicher Schaumstoff für den Einsatz als Dichtelement im Baubereich bekannt, der mit einem klebrigen Imprägnat getränkt ist und nach Kompression eine verzögerte Rückstellung vollzieht.

Der vorliegenden Erfindung liegt die Aufgabe zugrunde, ein Dichtungselement mit einem Grundmaterial aus dauerelastischem Schaumstoff zu schaffen, das gute Dichtwerte erzielt, das nach Kompression eine verzögerte Rückstellung vollzieht und dem weitere nützliche Eigenschaften wie Feuerbeständigkeit hinzugefügt werden können. Eine weitere Aufgabe der vorliegenden Erfindung ist es, ein Verfahren zur Herstellung eines derartigen Dichtungselements anzugeben, das einfach und kostengünstig ist.

Diese Aufgabe wird durch die Merkmale des Anspruchs 1 und des Anspruchs 5 gelöst.

Das erfindungsgemäße Dichtungselement besteht aus einem Grundmaterial aus dauerelastischem Schaumstoff, der zumindest teilweise kleine Kunststoffkugeln aufweist, die aus einer Polymerschale mit darin enthaltenem Gas bestehen und die aufgrund von Erhitzung expandiert sind, so dass das Dichtungselement eine verringerte Luftdurchlässigkeit und eine erhöhte Schlagregendichtigkeit besitzt. Dadurch wird gewährleistet, dass das Dichtungselement vielseitig und flexibel einsetzbar ist und bereits bei geringer Komprimierung sehr gute Dichteigenschaften aufweist. Zudem ist das Dichtungselement mit einem klebrigen Imprägnat mit einem Anteil von 0,01 bis 20 Gew-% Kunststoffkugeln imprägnat und vollzieht somit nach Kompression eine verzögerte Rückstellung. Dadurch bleibt genügend Zeit, auch schwer zugängliche oder dünne Fugen mit den Dichtelementen abzudichten.

Vorzugsweise ist das Dichtungselement derart ausgebildet, dass das Grundmaterial ein Schaumstoff, wie z.B. Polyurethanschaum, Melaminharzschaum, Silikonschaum, PVC-Schaum, Polyethylenschaum oder dergleichen, ist. Derartige Grundmaterialien sind preisgünstig und mit Standardverfahren herstellbar.

Vorzugsweise besitzen die Kunststoffkugeln in expandiertem Zustand einen Durchmesser von 30 µm bis 120 µm, vorzugsweise etwa 40 µm. Durch das Anlagern derartiger Kugeln an die Stege der Zellstruktur werden die Querschnitte des Schaumstoffs verringert, wodurch die verringerte Luftdurchlässigkeit erzielt wird.

Außerdem enthält das Dichtungselement Zusätze, die flammhemmende und/oder UV-beständige Eigenschaften besitzen.

Das erfindungsgemäße Verfahren zur Herstellung eines Dichtungselements weist folgende Schritte auf: Aufschäumen eines Grundmaterials zu einem dauerelastischen Schaumstoff; Imprägnieren des aufgeschäumten Schaumstoffs mit einem klebrigen Imprägnat, in dem kleine Kunststoffkugeln, die aus einer Polymerschale mit darin enthaltenem Gas bestehen, enthalaren sind, so dass die Kunststoffkugeln in den Schaumstoff eindringen, und Trocknen des mit dem Imprägnat imprägnierten Schaumstoffs, wobei das Imprägnat 0.01 bis 20 Gew.-% kleine Kunststoffkugeln enthält. Bei diesem Anteil wird eine verringerte Luftdurchlässigkeit und eine erhöhte Schlagregendichtigkeit des Dichtungselements gewährleistet, ohne dass die Kugeln aus dem Schaumstoff herausquellen bzw. das Ausgangsvolumen des Schaumstoffs übersteigen.

Vorzugsweise enthält das Imprägnat Kunststoffkugeln in unexpandiertem Zustand, so dass eine Volumenvergrößerung der Kugeln gleichzeitig mit dem Trocknungsschritt erfolgt. Ebenso kann es sinnvoll sein, wenn das Imprägnat Kunststoffkugeln in teilweise oder vollständig vorexpandiertem Zustand enthält.

Vorzugsweise enthält das Imprägnat 0,5 bis 7 Gew.-%, kleine Kunststoffkugeln.

Die verzögerte Rückstellung des Dichtungselements nach Kompression ergibt sich dadurch, dass das Imprägnat klebrige Eigenschaften aufweist, wie dies z.B. bei einer Dispersion auf Acrylatbasis der Fall ist. Grundsätzlich sind auch andere klebrige Imprägnate mit Chlorparaffin, Bitumen etc. geeignet.

Besonders einfach wird dem Dichtungselement eine feuerbeständige Eigenschaft zugeführt, indem das Imprägnat ein flammhemmendes Mittel enthält.

Vorzugsweise erfolgt beim erfindungsgemäßen Verfahren das Trocknen des Dichtelements für eine Dauer von ca. 1 bis 20 min bei einer Temperatur von etwa 50°C bis 210°C, vorzugsweise 100°C bis 190°C.

Weitere Einzelheiten, Merkmale und Vorteile der vorliegenden Erfindung ergeben sich aus der nachfolgenden Beschreibung und den Ansprüchen.

Das Grundmaterial des erfindungsgemäßen Dichtungselements besteht vorzugsweise aus einem vollständig aufgeschäumten, weichen, flexiblen Schaumstoff, vorzugsweise aus einem Polyurethan-Schaumstoff. Ebenso ist aber auch z.B. die Verwendung eines Melaminharzschaums, eines Silikonschaums, eines PVC-Schaums, eines Polyethylenschaums oder dergleichen denkbar.

Das Grundmaterial weist nach dem Aufschäumen ein netzförmiges Grundgerüst auf, in dem Stege mit zwischengelagerten Zellmembranen angeordnet sind. Der Schaumstoff ist in der Regel als offenzelliger Schaumstoff ausgebildet.

Die Kunststoffkugeln sind Mikrosphären, die aus einer Polymerschale mit darin enthaltenem flüssigem Gas bestehen. Bei Erhitzung erhöht das Gas den Innendruck und die Polymerschicht erweicht. Dadurch wird eine erhebliche Volumenvergrößerung, in der Regel um mehr als das Vierzigfache, der Mikrosphären bewirkt, wodurch der Durchmesser üblicherweise auf 30 µm bis 50 µm, vorzugsweise etwa 40 µm, ansteigt, was gleichzeitig einer Verringerung deren spezifischen Gewichts von ungefähr 1000 kg/m³ auf etwa 30 kg/m³ entspricht. Auch eine Vergrößerung auf bis zu etwa 120 µm Durchmesser ist denkbar. Die Volumenvergrößerung ist über einen langen Zeitraum bei normalen Umgebungstemperaturen nahezu irreversibel. Zudem sind die Mikrosphären in expandiertem Zustand komprimierbar und damit dauerelastisch. Derartige Mikrosphären werden beispielsweise von der schwedischen Firma Expancel vertrieben.

Nach dem vollständigen Aufschäumen des Schaumstoff-Grundmaterials wird das Dichtungselement mit einem geeigneten Imprägnat behandelt, in der Regel durch vollständige oder teilweise Benetzung der inneren und äußeren Zellstruktur mit einem geeigneten Verfahren, also z.B. Bestreichen, Besprühen oder Tränken in einem Tauchbad. Das Imprägnat ist vorzugsweise eine klebrige, wässrige Lösung, Suspension oder Dispersion. Vorzugsweise wird eine wässrige Bindemittellösung auf Acrylatbasis verwendet. Ebenso ist beispielsweise auch die Verwendung von Chlorparaffin oder Bitumen als Basis möglich. Vorzugsweise sind dem Imprägnat hydrophile und hydrophobe Komponenten beigemengt. Das Imprägnat enthält die Mikrosphären mit einem Anteil von zwischen 0,01 und 20 Gew.-%, vorzugsweise zwischen 0,5 und 7 Gew.-%. Diese lösen sich im Imprägnat nicht auf, sondern sind darin als Teilchen vorhanden.

Das Imprägnat weist vorzugsweise eine durchschnittliche Viskosität auf, so dass der offenzellige Schaumstoff beim Imprägnieren vollständig und homogen benetzt wird. Da der Schaumstoff in der Regel offenzellig ist, erfolgt bei der Imprägnierung nicht nur eine äußere Benetzung der Zellwände und -stege, sondern eine vollständige Durchdringung, so dass eine innere Benetzung mit dem Imprägniermedium und eine Einbindung der Mikrosphären in den Zellbereichen erzielt wird. Die Mikrosphären, die auch im Vergleich zu den Stegen der Zellstruktur geringe Ausmaße besitzen, lagern sich dabei an diesen als eine Art knollenartige Vorsprünge an. Die Verklebung mit der Zellstruktur erfolgt hauptsächlich aufgrund der Eigenschaften des Imprägnats.

Üblicherweise sind in dem Imprägnat die Mikrosphären in unexpandiertem Zustand (Durchmesser z.B. etwa 10 µm) enthalten. Während des anschließenden Trocknens des imprägnierten Schaumstoffs expandieren die Mikrosphären und verleihen dem Dichtungselement dadurch seine verbesserten Eigenschaften bezüglich Luft- und Schlagregendichtigkeit. In einem solchen Fall wird das imprägnierte Dichtungselement bei einer Temperatur von ungefähr ca. 70°C bis 210°C wärmegetrocknet, bevorzugt bei ca. 100°C bis 190°C, und zwar für eine Dauer von ca. 1 bis 20 min.

Ebenso ist es denkbar, dass die Kugeln bereits in teilweise oder vollständig vorexpandiertem Zustand im Imprägnat enthalten sind. Dann können sogar noch niedrigere Temperaturen (z.B. ca. 50°C) über einen längeren Zeitraum zum Trocknen des Imprägnats angewendet werden.

Das so hergestellte Dichtungselement besitzt eine verringerte Luftdurchlässigkeit und erhöhte Schlagregendichtigkeit. Hierdurch wird gewährleistet, dass die DIN-Norm 18542 BG1 bezüglich Schlagregendichtigkeit bei einer geringeren Komprimierung als bei bisherigen Dichtungselementen auf Basis von Weichschaumstoffen, die in der Regel auf 25% bis 33% der ursprünglichen Dicke komprimiert sein müssen, erfüllt wird.

Vorzugsweise weist das Imprägnat UV-beständige Substanzen auf, die den Alterungsprozess des Schaumstoffs verlangsamen und ihn resistenter gegen direkte Sonneneinstrahlung machen. Ebenso ist es vorteilhaft, dass das Imprägnat Flammschutzmittel enthält, so dass auch die DIN ISO EN 4102 B1 bezüglich des Brandverhaltens erfüllt wird. Auch andere DIN-Normen hinsichtlich Temperaturstabilität, Verträglichkeit mit anderen Baustoffen usw. können durch das vorliegende Dichtungselement erfüllt werden.

Weiterhin kann ein erfindungsgemäßes Dichtungselement auch beliebig mit anderen Elementen kombiniert werden, z.B. durch Verklebung. Auf diese Weise sind Dichtungselemente denkbar, die auf einem Bereich erfindungsgemäß ausgestaltet sind, auf einem anderen Bereich jedoch z.B. besonders luftdurchlässig oder flammhemmend.

Außerdem ist es denkbar, durch geeignetes Bestreichen oder Besprühen des Dichtungselements mit einem Imprägnat zu bestimmen, welche Bereiche des Grundmaterials mit einem bestimmten Imprägnat versehen werden sollen. Beim erfindungsgemäßen Verfahren kann dabei der Arbeitsschritt des Imprägnierens in mehrere Schritte aufgeteilt werden, wobei jeweils nur Teilbereiche des hergestellten Grundmaterials unterschiedlich imprägniert werden. Vielfältige Kombinationen von Produkteigenschaften sind somit vorstellbar.

Das Imprägnat ist vorzugsweise so zu wählen, dass das Dichtungselement nach Kompression eine verzögerte Rückstellung vollzieht, vorzugsweise homogen über die gesamte Länge und Breite. Das Dichtungselement kann aufgrund seiner Eigenschaften auch als vorkomprimierte Rollenware ausgeliefert werden.

Das erfindungsgemäße Dichtungselement eignet sich somit hervorragend zum Einsatz in der Anwendung als Fugendichtband und kann sowohl zur Abdichtung gegen Regen, Feuchtigkeit, Luft und Schall, zur thermischen Entkopplung und zur Vibrationsdämmung und Entdröhnung sowie zur Kapselung verwendet werden. Besonders bevorzugt ist die Abdichtung von Bewegungsfugen im Innen- und Außenbereich, die eine relativ hohe Schlagregendichtigkeit und Luftdichtigkeit erfordern.

Für eine sichere Befestigung und als Montagehilfe kann das erfindungsgemäße Dichtungselement zudem mit einer oder mehreren selbstklebenden Schichten ausgestattet sein.

Somit wird ein Dichtungselement geschaffen, das gegenüber den bisher bekannten Dichtungselementen erhebliche Vorteile liefert, flexibel einsetzbar ist und besonders den Anforderungen im Baubereich, aber auch in anderen Industriebereichen, wie dem Fahrzeug- und Karosseriebau, exzellent angepasst ist. Ein besonders vielversprechender Einsatzbereich ist die Verwendung zur Entdröhnung und Maschinenkapselung und für elektronische Bauteile. So sind bei entsprechender Schaumstoff- und Imprägnatauswahl für die Elektronikindustrie automative elektrisch leitfähige Anwendungen denkbar.

Das erfindungsgemäße Verfahren zur Herstellung eines Dichtungselements ist kostengünstig und flexibel und ermöglicht so die Herstellung eines Dichtungselements mit den vorgenannten Vorteilen.

## Patentansprüche

1. Dichtungselement mit einem Grundmaterial aus dauerelastischem Schaumstoff, wobei das Dichtungselement kleine Kunststoffkugeln aufweist, die aus einer Polymerschale mit darin enthaltenem Gas bestehen und aufgrund von Erhitzung expandiert sind, so dass das Dichtungselement eine verringerte Luftdurchlässigkeit und eine erhöhte Schlagregendichtigkeit besitzt,
**dadurch gekennzeichnet, dass**
das Dichtungselement mit einem klebrigen Imprägnat mit einem Anteil von 0,01 bis 20 Gew.-% Kunststoffkugeln imprägniert ist und somit nach Kompression eine verzögerte Rückstellung vollzieht.

2. Dichtungselement nach Anspruch 1, **dadurch gekennzeichnet, dass** das Grundmaterial ein Schaumstoff, wie z.B. Polyurethanschaum, Melaminharzschaum, Silikonschaum, PVC-Schaum, Polyethylenschaum oder dergleichen, ist.

3. Dichtungselement nach Anspruch 1 oder 2, **dadurch gekennzeichnet, dass** die Kunststoffkugeln in expandiertem Zustand einen Durchmesser von 30 µm bis 120 µm, vorzugsweise etwa 40 µm, aufweisen.

4. Dichtungselement nach einem der vorangehenden Ansprüche, **dadurch gekennzeichnet, dass** es flammhemmende und/oder UV-beständige Eigenschaften besitzt.

5. Verfahren zur Herstellung eines Dichtungselements mit verrringerter Luftdurchlässigkeit und erhöhter Schlagregendichtigkeit, das folgende Schritte aufweist:
- Aufschäumen eines Grundmaterials zu einem dauerelastischen Schaumstoff;
- Einbringen von kleinen Kunststoffkugeln, die aus einer Polymerschale mit darin enthaltenem Gas bestehen, in den Schaumstoff, und
- Trocknen des mit den Kunststoffkugeln versehenen Schaumstoffs,
**dadurch gekennzeichnet, dass**
das Einbringen der Kunststoffkugeln mittels Imprägnieren des aufgeschäumten Schaumstoffs mit einem klebrigen Imprägnat erfolgt, das 0,01 bis 20 Gew.-% kleine Kunststoffkugeln enthält.

6. Verfahren nach Anspruch 5, **dadurch gekennzeichnet, dass** das Imprägnat Kunststoffkugeln im unexpandierten Zustand enthält.

7. Verfahren nach Anspruch 5, **dadurch gekennzeichnet, dass** das Imprägnat Kunststoffkugeln in teilweise oder vollständig vorexpandiertem Zustand enthält.

8. Verfahren nach einem der Ansprüche 5 bis 7, **dadurch gekennzeichnet, dass** das Grundmaterial ein Schaumstoff, wie z.B. Polyurethanschaum, Melaminharzschaum, Silikonschaum, PVC-Schaum, Polyethylenschaum oder dergleichen, ist.

9. Verfahren nach einem der Ansprüche 5 bis 8, **dadurch gekennzeichnet, dass** das Imprägnat 0,5 bis 7 Gew.-%, kleine Kunststoffkugeln enthält.

10. Verfahren nach einem der Ansprüche 5 bis 9, **dadurch gekennzeichnet, dass** das Imprägnat eine wässrige Bindemittellösung auf Acrylatbasis ist.

11. Verfahren nach einem der Ansprüche 5 bis 10, **dadurch gekennzeichnet, dass** das Imprägnat ein flammhemmendes Mittel enthält.

12. Verfahren nach einem der Ansprüche 5 bis 11, **dadurch gekennzeichnet, dass** das Trocknen über eine Dauer von 1 bis 20 min bei einer Temperatur von 50°C bis 210°C, vorzugsweise von 100°C bis 190°C, erfolgt.

## Claims

1. Sealing element having a basic material of a permanently resilient cellular material, wherein said sealing element comprises small plastics beads consisting of a polymer shell enclosing a gas and expanded by heat influence, so that the sealing element has a reduced air permeability and increased impermeability to driving rain,
**characterized in that**
said sealing element is impregnated with a tenacious impregnation substance having a proportion of 0,01 to 20 % by weight of plastics beads, thus performing a delayed recovery after compression.

2. The sealing element of claim 1, **characterized in that** the basic material is a cellular material, as e.g. polyurethane foam, melamine resin foam, silicone foam, PVC foam, polyethylene foam or the like.

3. The sealing element of claim 1, **characterized in that** the plastics beads in expanded condition have a diameter of from 30 µm to 120 µm, preferably about 40 µm.

4. The sealing element of one of the preceding claims, **characterized in that** it comprises flame retardant and/or ultraviolet resistive properties.

5. A method of manufacturing a sealing element having reduced air permeability and increased impermeability for driving rain, said method comprising the following steps:
- foaming a basic material to form a permanently resilient cellular material,
- introducing small plastics beads consisting of a polymer shell with a gas enclosed therein into the cellular material, and
- drying the cellular material provided with said plastics beads,
**characterized in that**
the introducing of the plastics beads is performed by impregnating said cellular material with a tenacious impregnation substance comprising 0,01 to 20 % by weight of plastics beads.

6. The method of claim 5, wherein said impregnation substance comprises plastics beads in non-expanded condition.

7. The method of claim 5, **characterized in that** the impregnation substance comprises plastics beads in partially or totally pre-expanded condition

8. The method of one of claims 5 to 7, **characterized in that** said basic material is a cellular material, as e.g. polyurethane foam, melamine resin foam, silicone foam, PVC foam, polyethylene foam or the like.

9. The method of one of claims 5 to 8, **characterized in that** the impregnation substance comprises 0,5 to 7 % by weight of plastics beads.

10. The method of one of claims 5 to 9, **characterized in that** the impregnation substance is an aqueous binder solution on acrylate basis.

11. The method of one of claims 5 to 10, **characterized in that** the impregnation substance comprises a flame retardant agent.

12. The method of one of claims 5 to 11, **characterized in that** said drying is performed by 1 to 20 minutes at a temperature of 50°C to 210°C, preferably from 100°C to 190°C.

## Revendications

1. Elément d'étanchéité comportant un matériau de base en mousse à élasticité permanente, dans lequel l'élément d'étanchéité présente de petites billes en matière plastique, qui sont constituées d'une coque en polymère contenant du gaz et sont expansées du fait d'un chauffage, de sorte que l'élément d'étanchéité possède une perméabilité à l'air réduite et une étanchéité accrue à la pluie battante,
**caractérisé en ce que**
l'élément d'étanchéité est imprégné d'un agent d'imprégnation collant contenant une proportion de 0,01 à 20 % en poids de billes en matière plastique et exécute ainsi une reprise de forme retardée après compression.

2. Elément d'étanchéité selon la revendication 1, **caractérisé en ce que** le matériau de base est une mousse, comme par exemple une mousse de polyuréthanne, une mousse en résine de mélamine, une mousse de silicone, une mousse en PVC, une mousse de polyéthylène ou analogues.

3. Elément d'étanchéité selon la revendication 1 ou 2, **caractérisé en ce que** les billes en matière plastique à l'état expansé ont un diamètre de 30 µm à 120 µm, de préférence d'environ 40 µm.

4. Elément d'étanchéité selon l'une des revendications précédentes, **caractérisé en ce qu'**il possède des caractéristiques ignifuges et/ou de résistance aux UV.

5. Procédé de fabrication d'un élément d'étanchéité à perméabilité à l'air réduite et à étanchéité accrue à la pluie battante, présentant les étapes suivantes :
- moussage d'un matériau de base en une mousse à élasticité permanente ;
- introduction, dans la mousse, de petites billes en matière plastique qui sont constituées d'une coque de polymère contenant du gaz, et
- séchage de la mousse pourvue des billes en matière plastique,
**caractérisé en ce que**
l'introduction des billes en matière plastique s'effectue par imprégnation de la mousse moussée avec un agent d'imprégnation collant qui contient de 0,01 à 20 % en poids de petites billes en matière plastique.

6. Procédé selon la revendication 5, **caractérisé en ce que** l'agent d'imprégnation contient des billes à l'état non expansé.

7. Procédé selon la revendication 5, **caractérisé en ce que** l'agent d'imprégnation contient des billes à l'état partiellement ou complètement expansé.

8. Procédé selon l'une des revendications 5 à 7, **caractérisé en ce que** le matériau de base est une mousse, comme par exemple une mousse de polyuréthanne, une mousse en résine de mélamine, une mousse de silicone, une mousse de PVC, une mousse de polyéthylène ou analogues.

9. Procédé selon l'une des revendications 5 à 8, **caractérisé en ce que** l'agent d'imprégnation contient de 0,5 à 7 % en poids de petites billes en verre.

10. Procédé selon l'une des revendications 5 à 9, **caractérisé en ce que** l'agent d'imprégnation est une solution aqueuse de liant à base d'acrylate.

11. Procédé selon l'une des revendications 5 à 10, **caractérisé en ce que** l'agent d'imprégnation contient un agent ignifuge.

12. Procédé selon l'une des revendications 5 à 11, **caractérisé en ce que** le séchage s'effectue sur une durée de 1 à 20 minutes à une température de 50°C à 210°C, de préférence de 100°C à 190°C.
